Europäisches Patentamt

European Patent Office

Office européen des brevets

(11) Publication number: **0 208 505**
**A1**

## EUROPEAN PATENT APPLICATION

(21) Application number: 86305130.6

(22) Date of filing: 02.07.86

(51) Int. Cl.⁴: **C 08 J 5/10**
**C 08 K 3/38, C 08 L 21/00**

(30) Priority: 11.07.85 GB 8517530

(43) Date of publication of application:
14.01.87 Bulletin 87/3

(84) Designated Contracting States:
DE FR GB

(71) Applicant: SP TYRES UK LIMITED
Fort Dunlop
Erdington Birmingham B24 9QT(GB)

(72) Inventor: Alden, Steven John
73 Chestnut Drive
Erdington Birmingham B24 ODP(GB)

(74) Representative: Parr, Ronald Edward R.E. Parr & Co.
Colman House Station Road
Knowle Solihull West Midlands B93 0HL(GB)

(54) Method of bonding vulcanisable rubber compositions to metals.

(57) A method of bonding a vulcanisable rubber composition to a metal, in which the composition is vulcanised while in contact with the metal, characterised in that said composition includes a boron oxide-containing substance. The method is applicable, in particular, to the bonding of brass-coated steel filaments to vulcanisable topping compositions in the production of pneumatic tyres. The boron oxide-containing substance is conveniently borax.

Croydon Printing Company Ltd

0208505

This invention relates to a method of bonding vulcanisable rubber compositions to metals. In particular; it relates to the use in that method of certain boron compounds; it also relates to top steel fabrics including such topping compositions and to steel-reinforced tyres including them.

Motor car tyres whose treads are reinforced by steel reinforcements have several excellent properties and have become widely accepted in the motor car industry. However, they suffer from a substantial disadvantage in that the steel reinforcement is susceptible to the effect of moisture arising, for example, by incidental incorporation during manufacture or, externally, by way of accidental piercing of the tyre tread. Even the presence of the brass coating normally applied to the steel reinforcement does not protect the latter from the effect of such water. The primary purpose of the brass coating is to provide good adhesion between the steel reinforcement which is usually in filamentary form and the rubber composition in which the brass-coated steel-reinforcement is embedded or is in other close juxtaposition. The problem of corrosion of the steel filaments arises as a result of an unwanted reaction which takes place over a period of time between the rubber composition and the copper and/or the zinc of the brass leading to degradation of the latter and its separation from the underlying steel filaments. This permits the moisture to come into contact with the steel filaments leading to corrosion and, in severe cases, to their breakdown. The practical result of such breakdown is extremely serious since, once the belt-like steel reinforcement breaks it can no longer resist the intense centrifical force acting upon it when the tyre containing it rotates at high speeds and the tyre tread is torn from the tyre carcass.

Several solutions have been proposed in the prior art to meet this problem but none of them has proved really satisfactory.

It has now been found, according to the present invention, that the adhesion obtained when a vulcanisable rubber composition is vulcanised in the presence of a metal can be improved if the rubber composition contains certain boron compounds. In particular, the unwanted reaction between the brass plating on steel reinforcements and an adjacent topping composition can be prevented, or at least mitigated to a substantial extent, by the use of a boron oxide-containing substance, for example borax, which is conveniently used by incorporation in the topping composition.

Thus, in a first aspect the present invention provides a method of bonding a vulcanisable rubber composition to a metal, in which the composition is vulcanised while in contact with the metal, characterised in that said composition includes a boron oxide-containing substance.

Japanese patent application S 57-103848 discloses rubber compositions suitable for use as topping compositions, comprising:

(a)    an elastomer selected from natural rubber, synthetic polyisoprene rubber and polybutadiene rubber;

(b)    0.5-10% of a metal salt of a $C_6$-$C_{10}$ primary fatty acid (or 0.5-5% of said salt together with 0.5-5% of a cobalt salt of another organic acid; and

(c) 0.1-5% of orthoboric acid, metaboric acid, boracic anhydride or a metal salt of any of said compounds; the stated amounts of all those ingredients being based on 100 parts by weight of the rubber.

In a second aspect the present invention provides a topping composition for use in a steel-reinforced tyre, which comprises a vulcanisable elastomer; compounding ingredients for the elastomer; and a boron oxide-containing substance; provided that where the boron oxide-containing substance is orthoboric acid, metaboric acid or boric oxide (otherwise known as boracic anhydride) or a metal salt of any of them, the topping composition does not contain either:

(a) a mixture of 0.5-5% of a metal salt of a primary fatty acid having six to ten carbon atoms in the molecule and 0.5-5% of a cobalt salt of an acid other than a primary fatty acid having six to ten carbon atoms in the molecule; or

(b) 0.5-10% of a metal salt of a primary fatty acid having six to ten carbon atoms in the molecule; the stated amounts being based on 100 parts by weight of said elastomer.

In a third aspect the invention provides a top steel fabric comprising an array of steel-reinforcing cords or other filaments and a topping composition according to said second aspect of this invention.

In a fourth aspect the invention provides a tyre including a topping composition according to a first aspect of the invention or a top steel fabric according to the second aspect of the invention.

The primary fatty acids whose use is referred to above as being excluded from the second aspect of the present invention consist of the following:

caproic acid (otherwise known as n.hexanoic acid) $C_6H_{12}O_2$

oenanthylic acid (otherwise known as n.heptanoic acid) $C_7H_{14}O_2$

caprylic acid (otherwise known as n.octanoic acid) $C_8H_{16}O_2$

pelargonic acid (otherwise known as n.nonanoic acid) $C_9H_{18}O_2$

capric acid (otherwise known as n.decanoic acid) $C_{10}H_{20}O_2$

It is believed that the boron compounds used in the second aspect of the present invention serve to prevent — or at least reduce to a substantial extent — reaction between the elastomer or other component of the topping compound with the brass coating of the steel reinforcement. The boron compounds of particular interest for use in the present invention are tetraboric acid compounds, for example the acid itself or salts or other derivatives thereof. Examples of suitable salts are alkali metal salts of which the sodium salt is normally to be preferred on the account of its relative cheapness. The compounds may be in anhydrous or hydrated form; and an example of the latter are hydrates of sodium tetraborate of which borax is the decahydrate $Na_2B_4O_7.10H_2O$.

Where the topping composition is one not containing 0.5 - 10% of a metal salt of a $C_6$-$C_{10}$ primary fatty acid (or 0.5 - 5% of said salt together with 0.5 - 5% of cobalt salt of another organic acid) the boron compound used in the second aspect of the present invention can, for example, be orthoboric (boracic) acid, metaboric acid, boric oxide, boracic anhydride, and salts thereof.

With regard to the amount in which the boron compound is used in the topping composition, suitable amounts, for example, are those in the range 0.1 to 2%, especially 0.2 - 1%. If desired, amounts greater than 2% may be used but it is to be expected that any advantage thereby obtained is likely to be more than offset by the increased cost.

In a preferred form of the invention the boron compound is used in conjunction with a cobalt or nickel salt of stearic acid or like higher aliphatic acid and/or a cobalt or nickel salt of a naphthenic acid or like cyclic acid.

As stated above a very convenient way of using the boron compound inhibitor in the present invention is by its incorporation in the topping composition.

## EXAMPLES

There are now described by way of example two topping compositions, one of which is an embodiment of the invention, the other being a comparison compound. The first includes as the boron oxide-containing substance borax ($Na_2B_4O_7.10H_2O$).

The topping compositions were compounded from the ingredients shown in the following table and were laboratory mixed in an internal mixer, curatives being added subsequently on a mill.

|                    | Parts by weight | |
| ------------------ | --- | --- |
| Example No         | 1   | 2   |
| Natural rubber     | 100 | 100 |
| Carbon black N326  | 72  | 72  |
| Zinc oxide         | 8   | 8   |
| Stearic acid       | 1.45 | 1.45 |
| Sulphur            | 4.5 | 4.5 |
| Aromatic oil       | 6   | 6   |
| Cobalt stearate    | 1   | 1   |
| Accelerator        | 0.8 | 0.8 |
| Borax              | 1   | Nil |

From the unvulcanised topping compositions, test samples were produced by embedding brass plated steel cord and subsequent curing. Samples were then conditioned for a variety of periods and under a number of detrimental conditions, normally found to be deleterious to the cord to rubber bond.  Force to remove cords and the level of cord coverage were then assessed.

Also measured were hardness, resilience, strain @ 300% elongation and compound interfacial adhesion.

| Example | 1 | 2 |
|---|---|---|
| Hardness (I.R.H.D.) | 83 | 82 |
| Strain @ 300% elongation (MPa) | 14.1 | 15 |
| Resilience (%zwick) | 31.9 | 31.5 |
| Interfacial adhesion (N/10 mm) | 397 | 199 |
| Steel Peel (Force (N)/% Coverage) | | |
| Initial | 80/100% | 85/100% |
| Aged uncured, 80% relative humidity, 40 centigrade for 8 days | 120/30% | 59/20% |
| Aged cured, 5% salt solution 10 days, 50 centigrade | 150/100% | 55/60% |
| Steel Peel (Force (N)/% Coverage) | | |
| Aged cured, steam @ 120 centigrade 5 hours | 85/20% | 75/0% |
| Aged cured, nitrogen @ 100 centigrade 400 hours | 70/100% | 40/100% |

The same compounds were then mixed under production conditions and the compound used to produce steel breaker preparations which were subsequently used to produce 155SR13 steel radial tyres. 200 mm x 25 mm sections were removed circumferentially from tyres and tread to breaker and breaker to breaker adhesion level measured.

Tyres were also subjected to a salt corrosion test, whereby salt solution is introduced into the inside of a tyre which has had holes bored from the inside to the steel breaker, thus allowing the ingress of salt solution. The tyre is then mounted, inflated and run for 72 hours @ 25% overload condition. After test the tyres are cut to reveal the corroded areas, which are then closely examined.

| Example | 1 | 2 |
|---|---|---|
| Adhesion | | |
| Tread to breaker | 170N | 134N |
| Breaker to breaker | 205 | 165 |
| Breaker to breaker @ 100 centigrade | 204 | 160 |
| Salt test | | |
| Cords affected | 64 | 73 |
| Broken filaments | 3 | 52 |

Although the vulcanisable elastomer used in Example I above consists of natural rubber as the sole elastomer, the invention is also applicable to the use of synthetic rubbers used either singly or as mixtures of two or more such elastomers and to mixtures of natural rubber with one or more synthetic elastomers. For example, the elastomer composition can comprise a mixture of natural rubber and butadiene rubber in which the proportion of butadiene rubber is, for example, up to 20% (for example 5 to 20%) of the weight of the mixture.

Depending upon the nature of the elastomer or mixture of elastomers, compounding ingredients which can be used in the topping compositions of the invention are, for example:

|  | Parts by weight per 100 elastomer |
| --- | --- |
| Carbon black | 65-72 |
| Zinc oxide | 4-10 |
| Stearic acid | 0-2 |
| Sulphur | 2-6 |
| Accelerator | 0.8-2 |
| Aromatic oil | 0-6 |
| Cobalt stearate | 0.5-3 |

Where the compounding ingredients are as stated in the preceding paragraph a very convenient amount of borax is in the range 0.1 to 1 part by weight.

Boron compounds which can be used in the present invention can be, for example, inorganic or organic compounds. Amongst inorganic compounds are, for example, pyroboric, tetraboric, octaboric and polyboric compounds. Thus, for example, the boron compounds can be pyroboric or tetraboric acid and their salts and other derivatives. The salts can be, for example, salts of inorganic bases, for instance salts of metals of Group Ia or Group IIa of the Periodic Classification of Mendeléeff. Thus, examples of suitable metals from which the salts can be derived are sodium, potassium and calcium; the salts can also be derived from ammonium whether substituted or not.

The salts which can be used in the present invention include salts of aliphatic, aromatic or heterocyclic organic bases.

The boron compounds can be used, for example, as single substances or as mixtures of two or more substances, and they can be synthetic or naturally occurring substances. Boron compounds used can be anhydrous or in hydrate form.

The boron compound can be used in admixture or otherwise in conjunction with one or more organic salts of a transition metal, that is, metals of Group VIII of the Periodic Classification of Mendeléeff, for instance iron, cobalt or nickel. The transition metal salt can be one derived for example, from an alkanoic or other aliphatic acid, in particular a salt of a mono- or di-basic alkanoic acid having 18 or more carbon atoms in the molecule. Where the acid is a straight chain mono-basic acid it can be, for instance, stearic acid. Another type of acid from which the transition metal salt can be derived is a naphthenic or other alicyclic acid.

The boron compound can be used, for instance, in an amount of 0.5 to 2% by weight, especially 0.8 to 1.5% by weight. Reference herein to "% by weight" refers to parts by weight per 100 parts of rubber or elastomer.

Where a transition metal salt is used in conjunction with the boron compound the former is used, for instance, in an amount of 1 to 2 or other amounts in the range 0.5 to 3% by weight, especially where the amounts of boron compound is 0.1 to 1%.

Metals whose adhesion to rubbers can be improved according to the present invention include copper and its alloys, especially brass.

The typical application to brass - rubber bonding is in pneumatic tyre reinforcements where the brass is present as a very thin layer on a substrate material such as steel filaments. However, it will be appreciated that the bonding method of the present invention is also applicable to other articles in which the bonding of metal to rubber is important. Such articles include, for example, conveyor, transmission and other belting and hose.

With further reference to the transition metal salts optionally used in the invention, the salt can be derived, for example, from an alkanoic acid having 18 - 26 (for instance 18 - 22) carbon atoms in the molecule.

E.156

**020850**

CLAIMS

1. A method of bonding a vulcanisable rubber composition to a metal, in which the composition is vulcanised while in contact with the metal, characterised in that said composition includes a boron oxide-containing substance.

2. A method according to claim 1, in which said substance is pyroboric acid, tetraboric acid, octaboric acid or polyboric acid or a salt or other derivative of any of these acids.

3. A method according to claim 2, in which said substance is an inorganic pyroborate or tetroborate.

4. A method according to claim 3, in which said substance is borax.

5. A method according to any of the preceding claims, in which said metal is copper or an alloy thereof.

6. A method according to claim 5, in which said metal is brass.

7. A method according to claim 6, in which said metal is brass present as a thin coating on steel filaments.

8. A method according to any of the preceding claims, in which said substance is used in conjunction with an organic salt of a transition metal.

9. A method according to claim 8, in which said salt is a cobalt or nickel salt.

10. A method according to claim 9, in which said salt is a cobalt or nickel salt of an alkanoic acid having 18 or more carbon atoms in the molecule.

11. A method according to claim 10, in which said salt is cobalt or nickel stearate.

12. A method according to claim 10, in which said salt is cobalt or nickel naphthenate.

13. A composite structure obtained by bonding a vulcanisable rubber composition to a metal using the method claimed in any of claims 1 to 12.

14. A topping composition for use in a steel-reinforced tyre, which comprises:

a vulcanisable elastomer;

compounding ingredients for the elastomer; and a boron oxide-containing substance

provided that where the boron oxide-containing substance is orthoboric acid, metaboric acid or boric oxide (otherwise known as boracic anhydride) or a metal salt of any of them, the topping composition does not contain either:

a) a mixture of 0.5 to 5% of a metal salt of a primary fatty acid having six to ten carbon atoms in the molecule and 0.5 to 5% of a cobalt salt of an acid other than a primary fatty acid having six to ten carbon atoms in the molecule; or

b) 0.5 to 10% of a metal salt of a primary fatty acid having six to ten carbon atoms in the molecule; the stated amounts being based on 100 parts by weight of said elastomer.

15. A top steel fabric comprising an array of steel-reinforcing cords or other filaments and a topping composition as claimed in claim 14.

16. A tyre including a top steel fabric as claimed in claim 15.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | FR-A-2 120 890 (BRIDGESTONE) <br> * Claim 1 * | 1-16 | C 08 J 5/10 <br> C 08 K 3/38 <br> C 08 L 21/00 |
| A | FR-A-2 198 830 (YOKOHAMA RUBBER) <br> * Claim 4 * | 8-12 | |
| X | PATENTS ABSTRACTS OF JAPAN, vol. 8, no. 71 (C-217)[1508], 3rd April 1984; & JP-A-58 222 126 (BRIDGESTONE TIRE K.K.) (Cat. D) 23-12-1983 <br> * Abstract * | 1-13 | |

|  |
|---|
| **TECHNICAL FIELDS SEARCHED (Int. Cl 4)** |
| C 08 J <br> C 08 K <br> C 08 L |

The present search report has been drawn up for all claims

| Place of search | Date of completion of the search | Examiner |
|---|---|---|
| THE HAGUE | 14-10-1986 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82